# EUROPEAN PATENT APPLICATION

(11) **EP 2 503 821 A1**
(43) Date of publication of application: **26.09.2012**
(21) Application number: 10831073.1
(22) Date of filing: 24.08.2010
(51) Int. Cl.: H04W 36/24

(54) **MOBILE TERMINAL AND CELL RESELECTION METHOD THEREOF**

(30) Priority: 20.11.2009 CN 200910109684
(71) Applicant: ZTE Corporation, Shenzhen, Guangdong 518057 (CN)
(72) Inventor: JIAN, Hai, Shenzhen Guangdong 518057 (CN)
(74) Representative: Mozzi, Matteo
(86) International application number: PCT/CN2010/076312
(87) International publication number: WO 2011/060657

(57) **Abstract**

The present invention provides a cell reselection method of a mobile terminal. The method comprises the following steps: setting a reselection parameter of a mobile terminal from a GSM cell to a WCDMA cell; judging whether to initiate a reselection toward the WCDMA cell based on the comparison between a signal measurement value of the WCDMA cell and the parameter. The present invention further provides a mobile terminal. The present invention solves the problem that the mobile terminal, which is in the WCDMA/GSM dual mode and resides in the GSM cell, cannot reside in the WCDMA cell while the WCDMA network can be used actually, improves the capability and success rate of the reselection toward the WCDMA network of the mobile terminal, and enables the user to have more opportunities to enjoy rich and colourful 3G services.

## Description

### Field of the Invention

The present invention relates to the technical field of mobile communication, and in particular to a mobile terminal and a cell reselection method of a mobile terminal.

### Background of the Invention

With the development of mobile communication technology, at present, a same one operator usually operates a Wideband Code Division Multiple Access (WCDMA) network and a Global System for Mobile Communication (GSM) network at the same time, mainly for the reason: as the WCDMA in the mainstream standards of 3G is evolved from the GSM, in order to protect the investment on the GSM network at the earlier stage, the operator generally modifies and utilize the original GSM network; the operator needs to retain the old users of GSM network; and the WCDMA network construction cannot achieve complete coverage in short time. When the WCDMA network and the GSM network coexist, all the operators hope the users to switch from the GSM network to the WCDMA network, thus the users may use the rich 3G services, thereby increasing income of operators.

In 3GPP protocol, there are requirements for reselection from the GSM cell to the WCDMA cell, relating to many parameters and algorithms, mainly comprising the following two adopted.

First, control parameters of reselection from the GSM cell to the WCDMA cell are sent to the mobile terminal I in the system information SYSTEM_INFORMATION 2QUATER; the mobile terminal stores these parameters after receiving them. The key parameters are as follows:
3G Measurement Parameters Description
Qsearch_I = 7 (0x7)
Qsearch_C_Initial = 0 (0x0)
fdd_qoffset_present = 1 (0x1)
FDD_Qoffset = 0 (0x0)
FDD_REP_QUANT= 1 (0x1)
FDD_MULTIRAT_REPORTING = 0 (0x0)
FDD_Qmin = 7 (0x7)
tdd_qoffset_present = 0 (0x0)

The description of value thereof can be obtained by referring to the 3GPP protocol 45.008, wherein the value of Qsearch_I is usually 7, which means to select the WCDMA cell unconditionally as long as the measurement of the WCDMA cell meets requirements, and the operator makes such configuration usually for the purpose of facilitating users to switch to the WCDMA network as much as possible;

Second, after residing in the GSM cell, the mobile terminal constantly measures the surrounding WCDMA cells, calculates and judges the measured value according to the requirement of 6.6.5 in the 3GPP 45.008. Since the Qsearch_I is usually set as 7 (which means it is unconditional), finally it is judged whether the measured values of Received Energy per Chip Divided by the Noise Spectral Density (Ec/No) on each code channel of a transmitter after spreading spectrum and Received Signal Code Power (RSCP) meet the judging condition with the meeting lasts for more than 5 seconds, and if yes, a selection toward the WCDMA cell is initiated. The judging condition is that: whether the measured value of the Ec/No is greater than or equal to FDD_Qmin - FDD_Qmin_Offset; whether the measured value of the RSCP is greater than or equal to FDD_RSCP threshold.

The system information SYSTEM_INFORMATION_2QUATER sent by the network side decides the values of FDD_Qmin, FDD_Qmin_Offset and FDD_RSCP_threshold. The specific calculating and value setting methods can be know by referring to the 3GPP 45.008.

In practical field test, it is often found that the mobile terminal can register to the WCDMA network when being set only in the WCDMA mode, but under the situation that the mobile terminal is set in WCDMA/GSM dual mode, if the mobile terminal firstly resides in the GSM cell, the measured values of the Ec/No and RSCP always do not meet the requirements, which causes the reselection toward the WCDMA cell cannot be initiated. Thus, the mobile terminal cannot reside in the WCDMA cell while the WCDMA network can be used actually.

### Summary of the Invention

The technical problem to be solved by the present invention is to provide a mobile terminal and a cell selection method thereof, which can improve the reselection capability of the mobile terminal from the GSM cell to the WCDMA cell.

For solving the above technical problem, the present invention provides a cell selection method of a mobile terminal, which comprises the following steps:
setting a reselection parameter of a mobile terminal from a GSM cell to a WCDMA cell; and
judging whether to initiate a reselection toward the WCDMA cell based on the comparison between a signal measurement value of the WCDMA cell and the parameter.

The step of setting a reselection parameter of a mobile terminal from a GSM cell to a WCDMA cell comprises: setting a first threshold of Ec/No of the mobile terminal on each code channel of a transmitter after spreading spectrum of the WCDMA cell, and setting a second threshold of RSCP.

The step of judging based on comparison comprises: when the measured value of the Ec/No on each code channel of the transmitter after spreading spectrum of the WCDMA cell measured by the mobile terminal is greater than or equal to the first threshold which situation lasts for a first preset time, and the measured value of the RSCP of the WCDMA cell is greater than or equal to the second threshold which situation lasts for a second preset time, initiating a reselection toward the WCDMA cell.

The first threshold is set as being greater than or equal to -18dB and less than FDD_Qmin - FDD_Qmin_Offset, the second threshold is set as being greater than or equal to -105dB and less than FDD_RSCP threshold.

The first threshold and the second threshold can be preset during factory manufacture of the mobile terminal, and are modifiable.

A mobile terminal, which comprises a setting module and a detecting module; the setting module is configured to set a reselection parameter of the mobile terminal from a GSM cell to a WCDMA cell, and the detecting module is configured to judge whether to initiate a reselection toward the WCDMA cell based on the comparison between a signal measurement value of the WCDMA cell and the parameter.

The step of setting a reselection parameter of the mobile terminal from a GSM cell to a WCDMA cell comprises: the setting module sets a first threshold of Ec/No of the mobile terminal on each code channel of a transmitter after spreading spectrum, and sets a second threshold of RSCP.

The detecting module is further configured to measure the value of the Ec/No of the mobile terminal on each code channel of the transmitter after spreading spectrum of the WCDMA cell and the value of the RSCP of the mobile terminal, and initiate a reselection toward the WCDMA cell when the measured value of the Ec/No on each code channel of the transmitter after spreading spectrum is greater than or equal to the first threshold which situation lasts for a first preset time, and the measured value of the RSCP is greater than or equal to the second threshold which situation lasts for a second preset time.

The setting module is further configured to set the first threshold as being greater than or equal to -18dB and less than FDD_Qmin - FDD_Qmin_Offset, and set the second threshold as being greater than or equal to -105dB and less than FDD_RSCP_threshold.

The setting module is further configured to preset the first threshold and the second threshold during factory manufacture of the mobile terminal, and set the first threshold and the second threshold as being modifiable.

The beneficial effects of the present invention are as follows:
(1) in the present invention, setting a reselection parameter of a mobile terminal from a GSM cell to a WCDMA cell, and judging whether to initiate a reselection toward the WCDMA cell based on the comparison between a signal measurement value of the WCDMA cell and the parameter solve the problem that the mobile terminal, which is set in WCDMA/GSM dual mode, cannot reside in the WCDMA cell while the WCDMA network can be actually used, if the mobile terminal firstly resides in the GSM cell, and improve the capability and success rate of the reselection toward the WCDMA network of the mobile terminal, such that the user can have more opportunities to enjoy rich and colourful 3G services;
(2) in the present invention, when the measured value of Ec/No on each code channel of a transmitter after spreading spectrum of a WCDMA cell measured by the mobile terminal is greater than or equal to a first threshold which situation lasts for a first preset time, and the measured value of RSCP of the WCDMA cell is greater than or equal to a second threshold which situation lasts for a second preset time, a reselection toward the WCDMA cell is initiated, which is simple and easy to perform;
(3) in the present invention, the first threshold and the second threshold can be determined according to empirical values, which ensures that the mobile terminal can initiate a reselection from a GSM cell to a WCDMA cell when the condition is met; and
(4) in the present invention, the first threshold and the second threshold can be preset during factory manufacture of the mobile terminal and are modifiable, which enable the operator and user to set and modify based on actual need. Compared with the traditional art in which only the parameters sent by the network side are accepted, the first threshold and the second threshold can be adjusted according to actual situation, so it is more flexible and convenient to use.

### Brief Description of the Drawings

Fig. 1 is a schematic diagram of a structure of a specific embodiment of a mobile terminal of the present invention;
Fig. 2 is a flowchart of a cell reselection method of the present invention; and
Fig. 3 is a flowchart of a specific embodiment of a cell reselection method of the present invention.

### Detailed Description of the Embodiments

The present invention is described in detail hereinafter with reference to the accompanying drawings and in conjunction with embodiments.

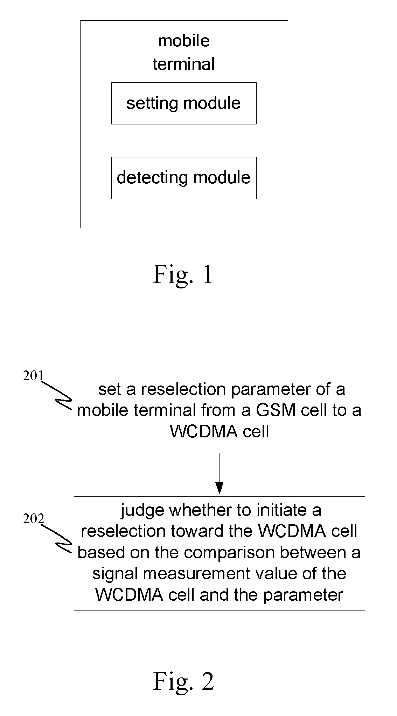

Fig. 1 is a schematic diagram of a structural of a specific embodiment of a mobile terminal of the present invention. As shown in Fig. 1, in an embodiment of the mobile terminal of the present invention, the mobile terminal comprises a setting module and a detecting module, wherein
the setting module is configured to set a reselection parameter of a mobile terminal from a GSM cell to a WCDMA cell;
the detecting module is configured to judge whether to initiate a reselection toward the WCDMA cell based on the comparison between a signal measurement value of the WCDMA cell and the set parameter.

The step that the setting module sets a reselection parameter of a mobile terminal from a GSM cell to a WCDMA cell comprises: the setting module sets a first threshold Ec/No_min of Ec/No of the mobile terminal on each code channel of a transmitter after spreading spectrum of the WCDMA cell and sets a second threshold RSCP_min of RSCP.

The step that the detecting module judges whether to initiate a reselection toward the WCDMA cell based on the comparison between a signal measurement value of the WCDMA cell and the set parameter comprises: the detecting module measures the value of the Ec/No on each code channel of the transmitter after spreading spectrum of the WCDMA cell and the value of the RSCP of the mobile terminal, and initiates a reselection toward the WCDMA cell when the measured value of the Ec/No on each code channel of the transmitter after spreading spectrum is greater than or equal to the first threshold Ec/No_min which situation lasts for a first preset time, and the measured value of the RSCP is greater than or equal to the second threshold RSCP_min, lasting for a second preset time.

The first preset time can be set according to specific need, and in this specific embodiment, it can be set as 5 seconds or other suitable time. The second preset time can also be set according to specific need, and in this specific embodiment, it can be set as 5 seconds or other suitable time.

Preferably, the first threshold Ec/No_min can be set as being greater than or equal to -18dB and less than FDD_Qmin - FDD_Qmin_Offset, and the second threshold RSCP_min can be set as being greater than or equal to -105dB and less than FDD_RSCP_threshold.

The setting module is further configured to set the first threshold Ec/No_min and the second threshold RSCP_min according to empirical value.

The setting module can preset the first threshold Ec/No_min and the second threshold RSCP_min during factory manufacture of the mobile terminal, and set them as being modifiable.

Fig. 2 is a flowchart of a cell reselection method of the present invention. As shown in Fig. 2, the cell reselection method of the present invention comprises the following steps:
Step 201: setting a reselection parameter of a mobile terminal from a GSM cell to a WCDMA cell;
Step 202: judging whether to initiate a reselection toward the WCDMA cell based on the comparison between a signal measurement value of the WCDMA cell and the parameter.

In this case, the parameter compared with the signal measurement value of the WCDMA cell is the reselection parameter from the GSM cell to the WCDMA cell in Step 201.

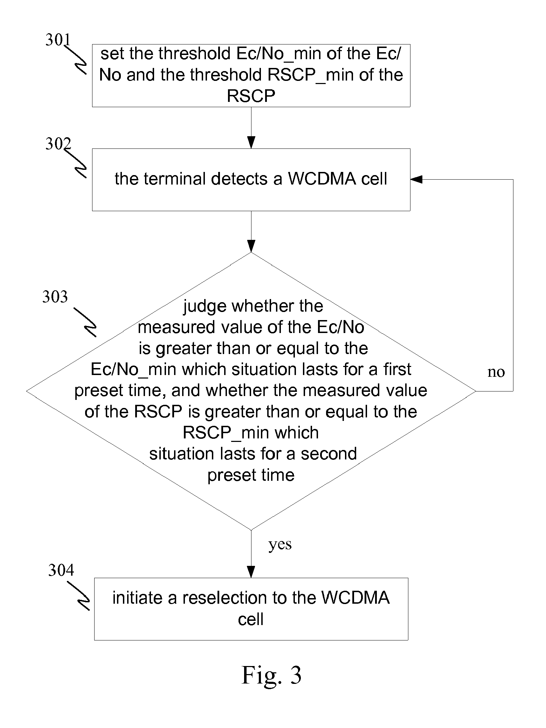

The cell reselection method of a mobile terminal of the present invention is described hereinafter in detail. Fig. 3 is a flowchart of a specific embodiment of a cell reselection method of the present invention. As shown in Fig. 3, the method comprises the following steps:
Step 301: setting the threshold Ec/No_min of the Ec/No and the threshold RSCP_min of the RSCP.

In this specific embodiment, the threshold of the Ec/No is the first threshold, and specifically the first threshold Ec/No_min can be set as being greater than or equal to -18dB and less than FDD_Qmin - FDD_Qmin_Offset. The threshold of the RSCP is the second threshold, and specifically the second threshold RSCP_min can be set as being greater than or equal to -1 05dB and less than FDD_RSCP_threshold.

The first threshold Ec/No_min and the second threshold RSCP_min can be set according to empirical value.

In practical application, the first threshold Ec/No_min and the second threshold RSCP_min can be preset during factory manufacture of the mobile terminal, and are set as being modifiable, thus they can be adjusted flexibly for different networks;

Step 302: the mobile terminal detects a WCDMA cell.

The mobile terminal measures the surrounding WCDMA cells and measures the signals thereof. In this specific embodiment, it is needed to measure the Ec/No and its lasting period, the RSCP and its lasting period and so on.

Step 303: it is judged whether the measured value of the Ec/No is greater than or equal to the Ec/No_min which situation lasts for a first preset time, and whether the measured value of the RSCP is greater than or equal to the RSCP_min which situation lasts for a second preset time, and if yes, turning to Step 304, otherwise, turning to Step 302.

The mobile terminal judges whether the measured value of the Ec/No is greater than or equal to the Ec/No_min which situation lasts for the first preset time, wherein the first preset time can be set according to specific requirement, and in this specific embodiment, it can be set as 5 seconds or other suitable time; the mobile terminal judges whether the measured value of the RSCP is greater than or equal to the RSCP_min which situation lasts for the second preset time, wherein the second preset time can also be set according to specific requirement, and in this specific embodiment, it can be set as 5 seconds or other suitable time. If simultaneously meeting the conditions that the measured value of the Ec/No is greater than or equal to the Ec/No_min which situation lasts for the first preset time, and the measured value of the RSCP is greater than or equal to the RSCP_min which situation lasts for the second preset time, it turns to Step 304, otherwise, it turns to Step 302.

Step 304: initiating a reselection toward the WCDMA cell.

In this case, the mobile terminal initiates the reselection toward the WCDMA cell.

In the present invention, except setting the first threshold Ec/No_min and its first preset time, and the second threshold RSCP_min and its preset time, other parameters can be set according to the requirements of 6.6.5 in the 3GPP 45.008.

The above content is further detailed descriptions of the present invention in conjunction with the specific embodiments, and the specific embodiments of the present invention should not limit only to these descriptions. Those skilled in the art can perform some simple deductions or equivalent substitutions without departing from the spirit of the present invention, and these deductions or substitutions are within the scope of the claims of the present invention.

## Claims

1. A mobile terminal, **characterised in that** the mobile terminal comprises a setting module and a detecting module, wherein
the setting module is configured to set a reselection parameter of a mobile terminal from a Global System for Mobile Communications (GSM) cell to a Wideband Code Division Multiple Access (WCDMA) cell; and
the detecting module is configured to judge whether to initiate a reselection toward the WCDMA cell based on the comparison between a signal measurement value of the WCDMA cell and the set parameter.

2. The mobile terminal according to claim 1, **characterised in that** the step that the setting module sets a reselection parameter of a mobile terminal from a GSM cell to a WCDMA cell comprises: the setting module sets a first threshold of Received Energy per Chip Divided by the Noise Spectral Density (Ec/No) of the mobile terminal on each code channel of a transmitter after spreading spectrum, and sets a second threshold of Received Signal Code Power (RSCP).

3. The mobile terminal according to claim 2, **characterised in that** the step that the detecting module judges whether to initiate a reselection toward the WCDMA cell based on the comparison between a signal measurement value of the WCDMA cell and the set parameter comprises:
the detecting module measures the value of the Ec/No of the mobile terminal on each code channel of the transmitter after spreading spectrum of the WCDMA cell, and the value of the RSCP of the mobile terminal, and initiates a reselection toward the WCDMA cell when the measured value of the Ec/No on each code channel of the transmitter after spreading spectrum is greater than or equal to the first threshold which situation lasts for a first preset time, and the measured value of the RSCP is greater than or equal to the second threshold which situation lasts for a second preset time.

4. The mobile terminal according to claim 2 or 3, **characterised in that** the step that the setting module sets the first threshold of the Ec/No of the mobile terminal on each code channel of the transmitter after spreading spectrum and sets the second threshold of the RSCP comprises: the setting module sets the first threshold as being greater than or equal to -18dB and less than FDD_Qmin - FDD_Qmin_Offset, and sets the second threshold as being greater than or equal to -1 05dB and less than FDD_RSCP_threshold.

5. The mobile terminal according to claim 2 or 3, **characterised in that** the step that the setting module sets the first threshold of the Ec/No of the mobile terminal on each code channel of the transmitter after spreading spectrum and sets the second threshold of the RSCP comprises: the setting module presets the first threshold and the second threshold during factory manufacture of the mobile terminal, and sets the first threshold and the second threshold as being modifiable.

6. A cell reselection method of a mobile terminal, **characterised in that** the method comprises:
setting a reselection parameter of a mobile terminal from a GSM cell to a WCDMA cell; and
judging whether to initiate a reselection toward the WCDMA cell based on the comparison between a signal measurement value of the WCDMA cell and the parameter.

7. The cell reselection method of a mobile terminal according to claim 6, **characterised in that**,
the step of setting a reselection parameter of a mobile terminal from a GSM cell to a WCDMA cell comprises: setting a first threshold of Ec/No of the mobile terminal on each code channel of a transmitter after spreading spectrum of the WCDMA cell, and setting a second threshold of RSCP.

8. The cell reselection method of a mobile terminal according to claim 7, **characterised in that** the step of judging whether to initiate a reselection toward the WCDMA cell based on the comparison between a signal measurement value of the WCDMA cell and the set parameter comprises: judging based on comparison comprises initiating a reselection toward the WCDMA cell when the measured value of Ec/No on each code channel of the transmitter after spreading spectrum of the WCDMA cell, measured by the mobile terminal, is greater than or equal to the first threshold which situation lasts for a first preset time, and the measured value of the RSCP of the WCDMA cell is greater than or equal to the second threshold which situation lasts for a second preset time.

9. The cell reselection method of a mobile terminal according to claim 7 or 8, **characterised in that** the step of setting the first threshold and the second threshold comprises: setting the first threshold as being greater than or equal to -18dB and less than FDD_Qmin - FDD_Qmin_Offset, and setting the second threshold as being greater than or equal to -105dB and less than FDD_RSCP_threshold.

10. The cell reselection method of a mobile terminal according to claim 7 or 8, **characterised in that** the first threshold and the second threshold are preset during factory manufacture of the mobile terminal, and are modifiable.
